# FASCICULE DE BREVET EUROPEEN

(11) **EP 0 670 063 B1**
(45) Date de publication et mention de la délivrance du brevet: **15.10.1997**
(21) Numéro de dépôt: 94900859.3
(22) Date de dépôt: 19.11.1993
(51) Int. Cl.: G06F 12/14, G07F 7/10

(54) **PROCEDE ET CIRCUIT DE CRYPTAGE ET D'AUTHENTIFICATION POUR CARTE A MEMOIRE SYNCHRONE**
VERFAHREN UND SCHALTUNG ZUR VERSCHLUESSELUNG UND AUTHENTISIERUNG VON SPEICHERKARTEN
SYNCHRONOUS SMART CARD AUTHENTICATION AND ENCRYPTION CIRCUIT AND METHOD

(30) Priorité: 19.11.1992 FR 9213913
(43) Date de publication de la demande: 06.09.1995
(73) Titulaire: GEMPLUS CARD INTERNATIONAL, F-13420 Gémenos (FR)
(72) Inventeur: KOWALSKI, Jacek, F-13530 Trets (FR); MARTIN, Michel, F-13012 Marseille (FR); STERN, Jacques, F-75013 Paris (FR); JOUX, Antoine, F-35235 Thorigne-Fouillard (FR)
(74) Mandataire: Schmit, Christian Norbert Marie
(86) Numéro de dépôt international: FR9301140
(87) Numéro de publication internationale: WO9411829

(56) Documents cités:
- EP-A- 0 154 252
- EP-A- 0 472 939

## Description

Les cartes à puces actuelles peuvent être divisées en deux grandes catégories : cartes synchrones qui utilisent une logique cablée et dont le fonctionnement est commandé par une horloge extérieure; l'horloge est fournie par un lecteur de carte dans lequel la carte est insérée; et cartes asynchrones qui comportent un microprocesseur et dont le fonctionnement interne se déroule d'une manière largement indépendante du lecteur.

Les cartes à microprocesseur permettent des applications multiples puisque le fonctionnement de la carte ne dépend que des programmes qu'on va incorporer dans la carte; ces programmes peuvent être très variables selon l'application envisagée. Au contraire les cartes synchrones ne sont destinées en principe qu'à une seule application.

Un exemple typique de carte synchrone est la carte téléphonique à prépaiement, permettant de consommer un certain nombre d'unités de temps de communication téléphonique, payées d'avance lors de l'achat de la carte. Les fonctions principales de la logique câblée de la carte sont la réception d'impulsions venant du lecteur et représentant les unités consommées, la programmation de cellules de mémoire successives à partir de ces impulsions, et la transmission au lecteur d'informations sur le solde disponible.

Les exemples de cartes à microprocesseurs sont les cartes d'accès à des lieux réservés, les cartes bancaires, etc., et plus généralement beaucoup d'applications dans lesquelles la sécurité de l'information joue un rôle important. Cette sécurité est alors régie par des programmes spécifiques incorporés à la carte.

La sécurité d'utilisation de la carte est notamment assurée par des programmes d'authentification du porteur, c'est-à-dire des programmes qui vérifient que le porteur de la carte est bien autorisé à s'en servir, ou encore des programmes d'authentification de la carte, c'est-à-dire des programmes qui vérifient que la carte est bien une carte authentique et non une carte fabriquée frauduleusement ou modifiée frauduleusement.

Des programmes cryptographiques sont prévus dans les cartes à microprocesseur pour réaliser ces fonctions d'authentification, mais il n'en est pas de même pour les cartes synchrones. En effet, si les cartes synchrones continuent à être utilisées alors qu'elles ont par construction beaucoup moins de possibilités que les cartes à microprocesseurs, c'est parce qu'elles sont beaucoup moins coûteuses : leur logique câblée simple occupe beaucoup moins de surface de silicium qu'un microprocesseur et ses périphériques. Mais si on devait placer sur une carte synchrone des fonctions de calcul cryptographique analogues à celles qui sont utilisées dans les microprocesseurs, l'augmentation de coût qui en résulterait supprimerait l'intérêt de ces cartes. Un tel système est par exemple décrit dans les documents EP-A-0 472 939 et EP-A-0 154 252.

Cependant, de plus en plus, on doit se préoccuper de prévoir une sécurité contre les fraudes mêmes sur des cartes synchrones. On doit en effet se prémunir contre deux possibilités : d'une part la simulation frauduleuse d'une carte à puce authentique par une maquette ou un microordinateur personnel connecté au lecteur de carte; la maquette ou le microordinateur fournit les signaux qui sont attendus par le lecteur et laisse croire au lecteur qu'il est en présence d'une vraie carte; et d'autre part, la fabrication de fausses cartes en tous points identiques aux vraies.

L'invention se propose de réaliser des cartes synchrones comportant des moyens de logique câblée très simples et peu coûteux mais cependant très efficaces pour assurer des fonctions d'authentification, garantissant le droit d'utiliser la carte. L'invention est définie dans les revendications.

Dans son principe général, l'invention peut utiliser une procédure semblable à celle qui est utilisée pour les cartes à microprocesseur : le lecteur envoie par exemple à la carte un code binaire aléatoire; la carte effectue un calcul interne à partir de ce code et de données secrètes qu'elle contient dans sa mémoire; le résultat est envoyé au lecteur qui, de son côté, a effectué le même calcul à partir des mêmes données (le lecteur connaît les données secrètes de la carte ou tout au moins il peut les reconstituer), et les résultats sont comparés dans le lecteur pour authentifier la carte et donc valider son utilisation.

Mais ce qui fait la spécificité de l'invention, c'est le fait que le calcul effectué par la carte n'est pas un véritable calcul de type mathématique, car il demanderait des circuits trop complexes, mais c'est plutôt une procédure de cryptage à phases récurrentes utilisant une mémoire de données secrètes non volatiles; le procédé comporte l'exécution récurrente du cycle suivant : lecture d'un mot dans la mémoire de données secrètes, ce mot étant situé à une adresse déterminée au moins en partie par le contenu du mot lu au cycle précédent. Ainsi, le contenu de la mémoire à une adresse déterminée sert, en combinaison avec d'autres données logiques, à définir une adresse suivante pour trouver un nouveau contenu dans la mémoire. Les cycles de ces phases récurrentes se répètent un nombre de fois suffisant pour assurer un cryptage efficace. Le contenu de la mémoire de données est secret et ne peut être transmis aux bornes extérieures du circuit intégré.

Le procédé est particulièrement bien adapté à l'authentification d'une carte à mémoire : la carte comporte sa propre table de données secrètes et un circuit qui exécute les phases récurrentes sur cette table.

Cette notion de brouillage par phases récurrentes, consistant à définir à chaque fois une adresse à partir d'un contenu lu à une adresse précédente, peut être utilisée de multiples manières différentes.

Dans un exemple, les bits d'un code aléatoire envoyé par le lecteur sont mélangés aux bits extraits de la mémoire à une adresse déterminée, pour définir une nouvelle adresse, et les mots extraits de la mémoire dans ces phases récurrentes peuvent servir à créer un nouveau code aléatoire, interne à la carte; ce code aléatoire interne est lui-même utilisé ensuite pour l'obtention d'un résultat de cryptage. Ce résultat sera de préférence obtenu lui aussi par une succession de phases récurrentes mettant en oeuvre le même principe de détermination d'adresse à partir du mot lu à l'adresse précédente. On peut alors par exemple définir à chaque cycle une nouvelle adresse à partir de certains bits du mot lu à l'adresse précédente et de certains bits du code aléatoire interne.

Le résultat final de la procédure de cryptage mettant en oeuvre l'invention est défini par une succession de bits obtenus au cours d'une ou plusieurs phases déterminées de la procédure (tous les bits peuvent être obtenus au cours d'un même cycle de la phase récurrente, ou alors chaque bit ou chaque groupe de bits de la succession peut être obtenu au cours d'un cycle respectif). Ce résultat de cryptage apparaît par exemple dans un registre à la fin de la procédure, ou encore il est constitué par une succession de bits émis chacun au cours d'un cycle respectif à la fin de la procédure : par exemple un bit de résultat émis au cours de chacun des quatre derniers cycles d'une succession de 48 cycles.

Le résultat est transmis au lecteur de cartes qui a fait le calcul de son côté à partir des mêmes données et qui peut vérifier l'exactitude du résultat transmis.

On verra que cette procédure de cryptage non mathématique peut être mise en oeuvre avec des circuits logiques très simples, ce qui rend son intérêt très grand pour des cartes à mémoire de type synchrone.

Dans une réalisation préférée, très simple, on prévoit la phase récurrente suivante : au moins un bit d'adresse de la mémoire non volatile provient d'une donnée interne de la carte (numéro de série par exemple ou autre donnée d'identification de la carte), et les autres bits d'adresse proviennent d'un mot lu dans la mémoire à l'adresse précédente.

Dans une autre réalisation, d'ailleurs utilisable en même temps que la première, on prévoit la phase récurrente suivante : au moins un bit d'adresse provient d'une donnée externe (de préférence un code aléatoire), transmise par le lecteur et les autres bits d'adresse proviennent d'un mot lu dans la mémoire à l'adresse précédente.

Dans une autre réalisation encore, utilisable en même temps que les précédentes, on prévoit la phase récurrente suivante : au moins un bit d'adresse provient d'un registre de code aléatoire interne à la carte et les autres bits d'adresse proviennent d'un mot lu dans la mémoire à l'adresse précédente. Le bit de code aléatoire interne peut alors être sélectionné par une adresse de registre, cette adresse étant également définie, au moins en partie, à partir de tout ou partie du mot lu dans la mémoire à l'adresse précédente.

Le code aléatoire interne peut être créé lui-même par une phase récurrente du type indiqué ci-dessus, à partir d'un code aléatoire externe transmis par le lecteur. Par exemple, le code interne est constitué par la succession de bits obtenus au cours des différents cycles de la manière suivante : on prend un bit du mot lu à chaque fois dans la mémoire lorsque l'adresse de ce mot est elle-même définie en partie par le mot précédent et par un bit du code aléatoire externe.

Il est à noter qu'en dehors du cryptage par récurrence à partir d'une mémoire de données secrètes, un aspect important de l'invention consiste dans la création, le stockage, puis l'utilisation d'un code aléatoire interne à partir du code aléatoire externe, pour ne pas avoir à stocker ni à utiliser directement le code aléatoire externe au moment de la création du résultat. C'est alors le code interne qui subit la procédure récurrente de cryptage à l'aide de la mémoire de données secrètes.

L'invention concerne également un circuit de cryptage, notamment pour protéger une carte à puce contre une utilisation frauduleuse, ce circuit comportant une mémoire de données secrètes, un registre d'adresse pour contenir une adresse de mot de la mémoire, un registre de donnée pour recevoir et stocker temporairement le mot lu dans la mémoire à l'adresse indiquée par le registre d'adresse, des moyens pour placer dans le registre d'adresse au moins une partie du mot contenu dans le registre de donnée, et des moyens pour exécuter des lectures successives de la mémoire aux adresses successivement obtenues dans le registre d'adresse.

Le circuit comporte également de préférence un ou plusieurs des moyens suivants : des moyens pour introduire dans le registre d'adresse au moins un bit provenant d'une zone de mémoire non volatile de la carte; des moyens pour introduire dans le registre d'adresse au moins un bit provenant du lecteur de cartes (dans le cas où le circuit est incorporé à une carte); des moyens pour introduire dans le registre d'adresse au moins un bit provenant d'un registre volatile interne de la carte; enfin, des moyens pour placer dans un registre volatile des bits provenant du registre de donnée, ces bits étant obtenus au cours des lectures successives de la mémoire de données secrètes.

La mémoire qui contient la table de données secrètes est de préférence une mémoire non volatile EEPROM, et dans ce cas on prévoit qu'elle peut être adressée non seulement selon l'algorithme décrit, mais aussi simplement par un compteur d'adresse, pendant la phase de personnalisation dans laquelle on écrit la table de données dans la mémoire.

En résumé, l'invention concerne d'abord un procédé de cryptage d'information à l'aide d'une clé secrète, caractérisé en ce qu'il comporte l'exécution récurrente du cycle suivant : lecture d'un mot dans une mémoire de données secrètes comprise dans un système de cryptage, ce mot étant situé à une adresse déterminée au moins en partie par le contenu du mot lu au cycle précédent, la partie restante de l'adresse étant déterminée par au moins un bit provenant soit d'une donnée interne au système de cryptage, soit d'une donnée externe au système de cryptage, l'ensemble des mots lus au cours des cycles successifs servant à établir un nouveau mot aléatoire à l'intérieur du système de cryptage.

L'invention concerne ensuite un circuit de cryptage et une carte à puce pourvue de moyens de sécurité contre la fraude comme indiqué ci-dessus.

De plus, l'invention concerne un procédé de fonctionnement d'une carte à puce, dans une procédure d'authentification consistant à recevoir un aléa externe, à effectuer une opération de cryptage à partir de cet aléa et de données internes à la carte, et à renvoyer un résultat de cryptage, caractérisé en ce qu'un aléa interne est créé et stocké dans la carte à partir d'une procédure de cryptage utilisant l'aléa externe sans stockage de l'aléa externe dans la carte. De préférence, le résultat du cryptage est alors obtenu par une autre procédure de cryptage utilisant l'aléa interne. La création de l'aléa interne peut se faire par l'algorithme de cryptage récurrent non mathématique indiqué ci-dessus. L'invention concerne également une carte à puce comportant des moyens pour créer un aléa interne au fur et à mesure de l'arrivée de celui-ci sans stockage de l'aléa externe.

Enfin, selon une caractéristique supplémentaire, l'invention propose, dans les procédés de cryptage ou d'authentification définis ci-dessus , de faire intervenir dans le cryptage une donnée variant à chaque nouvelle utilisation de la carte, de préférence le contenu d'un compteur d'opérations non volatil contenu dans la carte, ce compteur étant incrémenté à chaque nouvelle utilisation de la carte. Dans le cas d'une transformation d'aléa externe en aléa interne, la carte comportera des moyens de transformation de l'aléa externe en aléa interne sans stockage de l'aléa externe et de préférence un compteur d'opérations.

L'invention est tout particulièrement applicable aux cartes de type synchrone, qui utilisent une logique câblée et dont le fonctionnement est commandé par une horloge extérieure.

Les procédures d'authentification auxquelles l'invention s'appliquent peuvent être des procédures d'authentification du porteur (porteur habilité) ou de la carte elle-même (carte valide).

D'autres caractéristiques et avantages de l'invention apparaîtront à la lecture de la description détaillée qui suit et qui est faite en référence aux dessins annexés dans lesquels :
- la figure 1 représente le circuit de base à partir duquel on peut mettre en oeuvre le procédé selon l'invention;
- la figure 2 représente une variante d'exécution du circuit de la figure 1;
- la figure 3 représente une architecture générale de circuit intégré permettant la mise en oeuvre de l'invention.

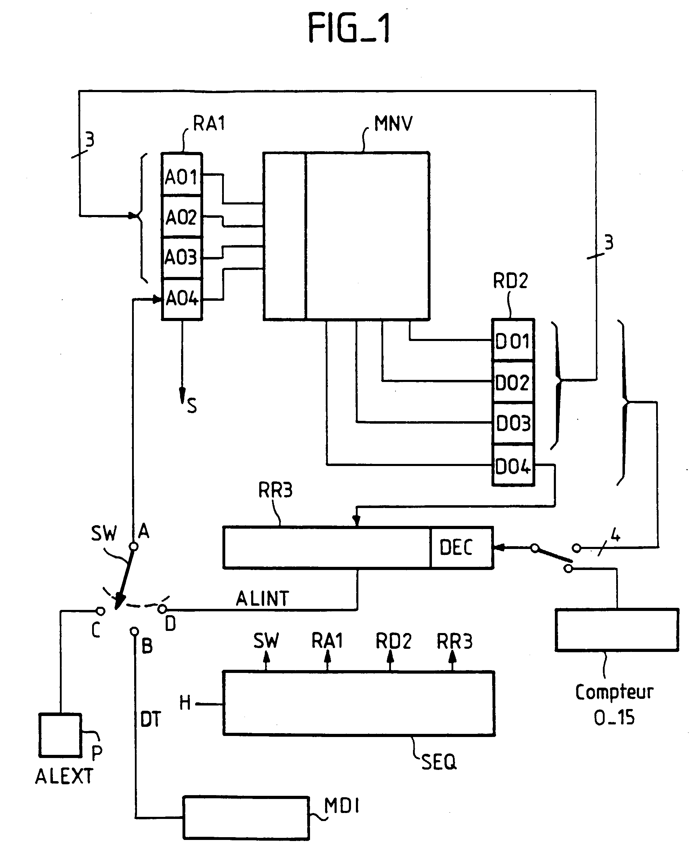

Le circuit représenté à la figure 1 est contenu dans une carte à mémoire synchrone dont la fonction principale, prépaiement ou autre, n'est pas représentée étant donné que cette fonction principale est indépendante des fonctions de sécurité auxquelles l'invention s'intéresse.

On ne s'occupera pas non plus de la constitution du lecteur de cartes : celui-ci doit pouvoir effectuer la même procédure que la carte pour la détermination d'un résultat à partir d'un code binaire aléatoire. Cependant le lecteur peut très bien utiliser des circuits différents de ceux de la carte pour effectuer ce calcul; en particulier le lecteur peut utiliser un microprocesseur pour simuler par logiciel les opérations de logique câblée de la carte. De plus, le lecteur doit de préférence pouvoir envoyer à la carte un code aléatoire. Ceci est une opération classique en matière de sécurité de carte et il n'est pas nécessaire de la décrire.

Une entrée du circuit de sécurité est constituée par une borne C par laquelle on peut justement introduire le code aléatoire envoyé par le lecteur, qu'on appellera code aléatoire externe ALEXT. L'entrée C peut être raccordée pour cela à un plot d'accès P de la carte.

Pour les cartes synchrones, la communication avec le lecteur se fait le plus souvent par des données binaires en série, c'est-à-dire que les bits apparaissent successivement sur l'entrée C, en synchronisme avec les signaux d'horloge H émis par le lecteur et reçus par la carte.

La borne C est connectée par un commutateur SW à une borne A. Le commutateur peut relier la borne A à l'une de trois bornes différentes qui sont :
- la borne C, qui peut recevoir le code aléatoire externe ALEXT,
- une borne B qui peut recevoir des données internes de la carte, par exemple une donnée DT représentant le numéro de série de la carte, contenue dans une mémoire interne MDI de la carte.
- une borne D qui peut recevoir les bits d'un aléa intérieur ALINT dont on verra comment il est obtenu au cours de la procédure récurrente à partir de l'aléa externe.

Le circuit d'authentification comporte : un premier registre RA1 pour contenir des adresses de mémoire; une mémoire non volatile MNV avec ses moyens de décodage et de lecture, cette mémoire pouvant recevoir comme adresse le contenu du registre RA1; un deuxième registre RD2 qui peut contenir les données lues dans la mémoire; selon la réalisation pratique utilisée, les registres RA1 et RD2 peuvent être distincts ou confondus; pour la simplicité de l'explication ils sont représentés distincts; et enfin un troisième registre RR3 qui contient des données extraites à partir de celles qui sont lues dans la mémoire et qui peut restituer (notamment vers la borne D) des bits qui sont sélectionnés d'une manière qu'on décrira plus loin.

Le registre RR3 comporte des moyens de décodage (DEC) pour sélectionner ces bits. Il s'agit donc d'un registre adressable, similaire par conséquent à une mémoire, mais qui peut être volatile puisque les données qu'il contient ne sont utilisées que pendant une séquence d'authentification.

Un séquenceur SEQ commande les différents circuits décrits ci-dessus (commutateur, mémoires, registres) selon une séquence préétablie, synchronisée par l'horloge extérieure H reçue du lecteur de cartes.

Le contenu de la mémoire non volatile MNV n'est pas accessible sur les bornes extérieures de la carte. Il s'agit donc d'un contenu secret, qui représente l'analogue d'une clé secrète de cryptage, puisque c'est ce contenu qui va définir le cryptage dans la procédure selon l'invention. Ce contenu est toutefois connu par le lecteur de carte puisque celui-ci doit effectuer exactement la même procédure de cryptage. Cette notion de clé secrète et de fonction de cryptage est employée ici par analogie avec les fonctions d'authentification utilisées dans les cartes à microprocesseurs; dans ces dernières, une fonction mathématique de cryptage F permet de calculer un résultat R à partir d'une ou plusieurs données (classiquement l'aléa externe ALEXT, des données internes DT de la carte, et une clé secrète K qui est stockée dans la carte et qui ne peut pas être lue sur les bornes extérieures de la carte) : R = F(ALEXT, DT, K).

Mais ici, il n'y a pas de fonction mathématique F mais plutôt une élaboration du résultat par une procédure récurrente faisant intervenir les adresses et les données de la mémoire.

L'aléa extérieur et les données internes de la carte interviennent dans la procédure récurrente de détermination d'une nouvelle adresse en ce sens que la nouvelle adresse comporte en partie les bits lus à l'adresse précédente et en partie des bits de l'aléa externe ou des bits des données internes de la carte.

On va décrire l'invention avec une mémoire de 16 mots de 4 bits, pour simplifier les explications, mais il est évident que l'invention n'est pas limitée à ce choix.

Le registre RA1 est un registre de 4 bits contenant l'adresse qu'on va appliquer à la mémoire. Ces bits d'adresse sont désignés par A01 à A03 respectivement. Le registre RD2 est un registre de 4 bits contenant le mot qui vient d'être lu dans la mémoire. Ces bits de données sont désignés par D01 à D03 respectivement.

Le registre RR3 est destiné à contenir l'aléa interne constitué au fur et à mesure de l'arrivée de l'aléa externe afin de permettre de stocker un aléa pendant une partie de la procédure d'authentification sans que l'aléa reçu du lecteur de carte en vue de cette procédure soit lui-même stocké dans la carte à puce. Le registre RR3 est rempli par des bits successifs arrivant à chaque cycle de récurrence et créés à partir des bits successifs de l'aléa externe.

La séquence d'authentification se déroule de préférence de la manière suivante, en trois grandes étapes, avec dans chaque étape une phase de cycles récurrents : ces trois grandes étapes sont une étape d'initialisation utilisant un numéro de série de la carte, une étape de constitution de code aléatoire interne à partir d'un code aléatoire externe envoyé par le lecteur, et une étape de constitution d'un résultat de cryptage à partir du code aléatoire interne. Mais l'invention n'est pas limitée à cet exemple.

### I. Initialisation

I.1 A la remise à zéro (commandée par le lecteur),le registre d'adresse RA1 est remis à zéro.
I.2 Le commutateur SW est placé sur la position B (réception d'une donnée interne DT en provenance de la carte et pouvant être par exemple un numéro de série inscrit de manière non volatile dans la carte).
I.3 Un bit de la donnée interne DT (au départ le premier bit) est placé dans la quatrième case A04 du registre d'adresse RA1.
I.4 Le contenu de la mémoire à l'adresse définie alors par le registre RA1 est placé dans le registre de données RD2.
I.5 Les trois bits des cases D01, D02, D03 du registre RD2 sont placés dans les cases A01, A02, A03 du registre RA1.
I.6 Une phase récurrente est alors exécutée : les étapes I.3 à I.5 sont répétées à chaque coup d'horloge : le deuxième bit de la donnée interne, puis le troisième, etc., remplissent la case A04 du registre RA1 et, en combinaison avec les trois bits de données lues à chaque fois à l'adresse précédente, constituent de manière récurrente une nouvelle adresse pour la mémoire non volatile.

L'étape I.6 dure autant de coups d'horloge qu'il y a de bits dans la donnée interne. Ce nombre est prédéfini et le séquenceur SEQ est construit en fonction de ce nombre.

### II. Utilisation de l'aléa externe.

Le code aléatoire externe va être utilisé pour créer un code aléatoire interne, par l'algorithme suivant :
II.1 Le commutateur SW est placé sur la position C où il peut recevoir du lecteur de carte l'aléa externe ALEXT. Les bits de cet aléa arriveront successivement à chaque coup d'horloge.
II.2 Un bit de l'aléa externe (au départ le premier bit) est placé dans la quatrième case A04 du registre d'adresses RA1;
II.3 Le contenu de la mémoire à l'adresse définie alors par le registre RA1 est placé dans le registre de données RD2.
I.4 Les trois bits des cases D01, D02, D03 du registre RD2 sont placés dans les cases A01, A02, A03 du registre RA1.
II.5 Le contenu de la case D04 est envoyé dans la première case du registre RR3 qui va dès lors commencer à contenir une donnée aléatoire puisque cette donnée dépend de l'aléa externe.
II.6 Les étapes II.2 à II.5 sont répétées à chaque coup d'horloge tant que dure la transmission de l'aléa externe, par exemple 16 coups d'horloge pour un aléa de 16 bits. Les cases du registre RR3 se remplissent successivement à l'étape II.5 et on aboutit à un aléa interne ALINT stocké dans le registre RR3. L'aléa externe n'a pas été stocké dans la carte pendant cette procédure; l'aléa interne a été créé bit par bit au fur et à mesure de l'arrivée des bits de l'aléa externe.

### III. Utilisation de l'aléa interne

L'aléa interne ainsi créé va maintenant être utilisé pour créer un résultat de l'algorithme d'authentification.
III.1 L'interrupteur est maintenant basculé vers la position D où il peut recevoir les bits de l'aléa interne stocké dans le registre RR3. Dans l'exemple préférentiel expliqué ici, le registre RR3 est constitué comme une mémoire de mots de 1 bit, cette mémoire étant adressable. La sortie de la mémoire est connectée au noeud D pour être reliée pendant cette phase à la case A04 du registre d'adresses RA1. Les bits de l'aléa interne ne seront pas transmis successivement dans l'ordre de leur inscription, mais dans un ordre obtenu (là encore) par une procédure récurrente faisant intervenir les adresses et les données de la mémoire.
III.2 Le mot contenu dans le registre de données RD2 est utilisé comme adresse du registre RR3, par l'intermédiaire du décodeur DEC associé à ce registre. Le bit lu à l'adresse ainsi indiquée est transmis à la case A04 du registre RA1. Simultanément, les trois premiers bits D01, D02, D03 du mot lu dans le registre RD2 sont placés dans les cases A01 à A03 du registre d'adresses RA1.
III.3 Le mot lu dans la mémoire à l'adresse maintenant contenue dans le registre d'adresse RA1 est placé dans le registre de données RD2.
III.4 Les étapes III.2 et III.3 sont répétées un nombre fixe de fois, par exemple 48 fois.

### IV. RESULTAT

Le résultat peut être prélevé dans un des registres, de préférence le registre d'adresses RA1 qui est le plus facilement relié à l'extérieur. Ce résultat est envoyé au lecteur qui a effectué le même algorithme de son côté. L'égalité des résultats indique l'authenticité de la carte.

Dans l'exemple décrit, le résultat peut être simplement le contenu du registre d'adresse RA1 à la dernière étape III.5 du dernier cycle de la phase récurrente III. Mais on peut évidemment concevoir des variantes comme la transmission d'un bit d'un registre (RA1 ou RD2 de préférence) au cours d'un cycle, puis la transmission d'un autre bit à un cycle suivant, etc.

On a ainsi décrit l'algorithme préféré selon l'invention pour l'établissement d'un résultat d'authentification. Parmi les points les plus intéressants de cet algorithme préféré, on notera les particularités suivantes :
- l'utilisation de procédures récurrentes permettant de constituer une adresse de mémoire à partir d'une part du contenu secret de la mémoire à une adresse précédente et d'autre part d'autres données; et
- la constitution d'un aléa interne à partir de l'aléa externe et du contenu secret de la mémoire, puis l'utilisation de cet aléa interne et non pas de l'aléa externe, de sorte qu'il ne servirait à rien à un fraudeur d'essayer de lire l'aléa envoyé par le lecteur.

Bien entendu, des variantes et des étapes plus complexes peuvent être prévues. Par exemple, on peut prévoir que le registre RR3 est rempli au cours de l'étape d'initialisation, par exemple avec une succession de bits tirés de la case A04 au cours des phases récurrentes de l'étape d'initialisation. Le contenu du registre RR3 peut alors être vidé, à raison d'un bit par phase, au cours des phases récurrentes de l'étape d'utilisation de l'aléa extérieur, dans une case du registre RA1, par exemple la case A03.

Un autre exemple de modification consiste à adresser le registre RR3, au cours de la phase de création de l'aléa interne, par l'adresse du mot en cours, ou par une adresse modifiée (par exemple incrémentée d'une unité).

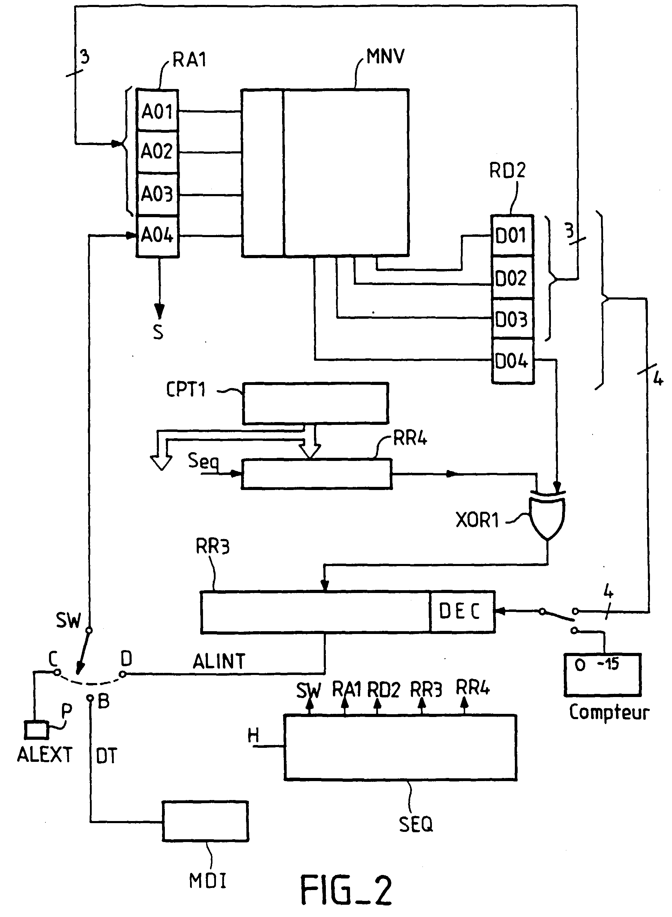

On va maintenant décrire, en référence à la figure 2, un perfectionnement selon l'invention. Dans ce perfectionnement, pour augmenter la sécurité contre la fraude, on propose d'utiliser dans l'algorithme de cryptage une donnée qui est modifiée à chaque nouvelle utilisation de la carte. Cette donnée peut être mise en oeuvre à l'intérieur du cycle récurrent constituant l'algorithme de cryptage, soit pour modifier à chaque fois l'adresse d'un nouveau mot, soit pour modifier un bit de résultat du cryptage.

On va décrire un exemple particulier d'utilisation de cette donnée variable à chaque nouvelle utilisation de la carte, dans le cas où la donnée variable sert à modifier un bit de résultat du cryptage. Dans ce cas, il n'est pas obligatoire que le cryptage se fasse par cycles récurrents d'adressage d'une table de données, mais on va cependant décrire l'exemple de réalisation avec un tel cycle.

La figure 2 est dans ce cas semblable à la figure 1, avec les modifications suivantes : la case D04 du registre RD2 n'est pas directement reliée au registre RR3, mais un circuit supplémentaire est inséré entre la case D04 et le registre RR3. Ce circuit comporte une porte OU-Exclusif XOR1, un registre RR4, et un compteur CPT1.

Le registre RR3 est encore destiné à contenir l'aléa interne constitué au fur et à mesure de l'arrivée de l'aléa externe afin de permettre de stocker un aléa pendant une partie de la procédure d'authentification sans que l'aléa reçu soit lui-même stocké dans la carte à puce. Le registre RR3 est rempli par des bits successifs arrivant à chaque cycle de récurrence à partir de la sortie d'une porte OU-Exclusif XOR1 dont une entrée provient de la case D04 du registre RD2 et l'autre entrée provient de la sortie série d'un registre à décalage RR4 à entrées parallèles contenant initialement le contenu d'un compteur d'opérations CPT1 non volatile. Le compteur d'opérations est incrémenté ou en tout cas modifié en principe à chaque nouvelle utilisation de la carte. Pour une carte de téléphone, on peut prévoir par exemple que le compteur est incrémenté à chaque utilisation donnant lieu à consommation d'unités prépayées, ou même à chaque consommation d'une unité.

Le décalage du registre à décalage RR4 peut être synchronisé avec les cycles de récurrence du cryptage de manière à avancer d'un bit à chaque nouveau cycle. Le registre RR4 est pour cela commandé par le séquenceur SEQ. Le contenu du compteur CPT1 est déversé dans le registre à décalage RR4 au moment de l'initialisation du circuit, à chaque nouvelle utilisation.

La sortie de la porte OU-Exclusif XOR1 est donc un bit qui est une combinaison du bit D04 du registre RD2 à un cycle donné et d'un des bits représentant le contenu du compteur d'opérations. On comprendra que cette disposition permet que la création de l'aléa interne s'effectue selon une procédure qui dépend d'une donnée variable de la carte (l'état du compteur d'opérations), cette donnée variable pouvant cependant être lue par le lecteur de carte (c'est en principe le cas pour le compteur d'opérations, aussi bien lorsque ce compteur compte un nombre d'utilisations de la carte que lorsqu'il compte un nombre d'unités de prépaiement déjà consommées). Dans l'exemple décrit, on a considéré qu'une simple porte OU-Exclusif permet d'introduire dans la procédure de cryptage le contenu variable du compteur CPT1. Mais bien entendu des fonctions différentes, éventuellement plus complexes, peuvent être utilisées pour combiner le contenu du compteur CPT1 avec d'autres éléments de la procédure de cryptage.

Les modifications de la séquence d'authentification décrite précédemment sont alors les suivantes :

Pendant l'opération I.1 de l'étape d'initialisation, le registre à décalage RR4 reçoit le contenu du compteur d'opérations CPT1.

Pendant l'étape d'utilisation de l'aléa externe, à l'étape II.5, le contenu de la case D04 est traité dans la porte XOR1 avec un bit correspondant du registre RR4; le résultat est envoyé dans la première case du registre RR3 qui va dès lors commencer à contenir une donnée aléatoire puisque cette donnée dépend de l'aléa externe. La procédure dépend de l'état du compteur d'opérations grâce au compteur CPT1, au registre à décalage RR4 et à la porte XOR1. On notera que le lecteur de cartes peut accéder au contenu de ce compteur pour tenir compte de l'état du compteur dans son propre calcul de résultat de cryptage. Le registre à décalage RR4 est ensuite décalé d'une unité en vue du cycle suivant.

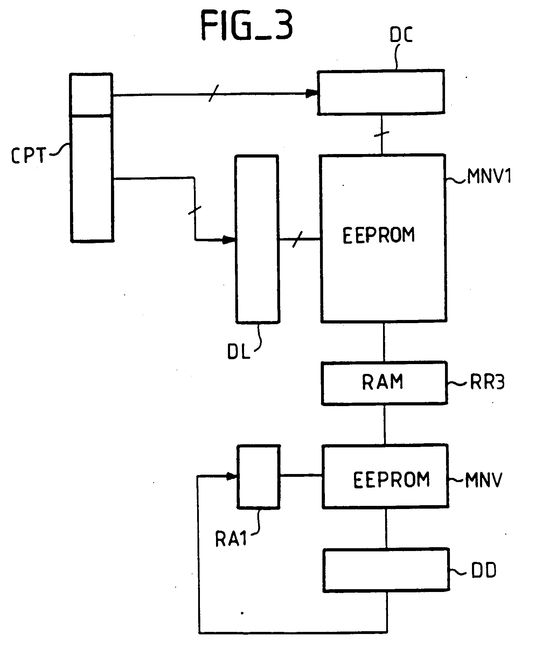

La figure 3 représente une architecture générale de circuit de carte à mémoire permettant de mettre en oeuvre l'algorithme d'authentification décrit, en s'écartant le moins possible des architectures habituelles de cartes à mémoire. Ainsi, l'invention pourra être mise en oeuvre avec une consommation minimale de surface de puce, limitant le surcoût lié à la sécurité.

Le circuit intégré s'organise autour d'une mémoire non volatile principale MNV1, qui contient des données utiles au fonctionnement normal de la carte à mémoire; elle contient aussi les données DT mentionnées précédemment (numéro de série de la carte par exemple). Cette mémoire MNV1 est pourvue de moyens de décodage classiques en ligne (DL) et en colonne (DC). Dans l'exemple représenté, c'est une mémoire organisée en mots de seize bits. Un compteur d'adresse CPT sert à définir les adresses successives des mots de la mémoire : les poids faibles définissent les adresses en colonne, et les poids forts les adresses en ligne; l'ensemble du circuit fonctionne en transmission séquentielle bit-à-bit, il faut donc incrémenter seize fois le compteur pour explorer les seize colonnes de la mémoire avant de changer de ligne.

Une autre portion de mémoire non volatile est représentée séparément de la mémoire MNV1; il s'agit de la mémoire MNV qui contient la table secrète de cryptage propre à la carte. Cette portion de mémoire est non accessible, sauf au moment de la personnalisation de la carte, c'est-à-dire au moment de l'écriture des données secrètes propres à la carte. Il est connu de réaliser de telles portions de mémoire que l'on rend inaccessible (après personnalisation) par claquage de fusibles.

Cette portion de mémoire inaccessible MNV est adressée par un registre d'adresses (4 bits dans l'exemple) qui va se remplir à chaque coup d'horloge H partiellement par des données en provenance de la mémoire MNV et partiellement par d'autres données. C'est l'équivalent du registre d'adresse RA1 de la figure 1. L'équivalent du registre RD2 n'est pas représenté sur la figure 2; il peut faire partie intégrante de la mémoire MNV.

Un registre de mémoire RAM de 16 bits est en outre prévu pour stocker des bits en provenance de la mémoire MNV, ce bit étant accessible par un décodeur qui peut justement être le décodeur de colonne DC de la mémoire MNV1. Ce registre est l'équivalent du registre RR3 de la figure 1, qui contiendra l'aléa interne généra à partir de bits de la mémoire MNV.

Enfin, puisque la mémoire est organisée en mots de 16 bits, un décodeur de colonnes DD est placé en sortie de la mémoire secrète MNV. Ce décodeur a une double fonction : d'une part sélectionner dans la mémoire MNV un mot de 4 bits parmi 16 bits pour en placer une partie dans le registre d'adresses RA1, d'autre part sélectionner un bit parmi seize dans le registre RAM pour le placer également dans le registre d'adresse.

Cette organisation générale de mémoire n'est donnée qu'à titre indicatif pour montrer comment on peut rendre l'algorithme de l'invention compatible avec les architectures existantes.

Un autre aspect intéressant de l'invention réside dans la possibilité de faire contrôler par la carte elle-même un résultat de cryptage fourni par le lecteur de cartes : la carte et le lecteur exécutent le même algorithme et on peut prévoir que le lecteur envoie régulièrement un bit pendant la phase où la carte utilise et crypte l'aléa interne. En effet, à ce moment là le lecteur est libre de transmettre des données. On peut prévoir par exemple le contrôle suivant : à un instant donné un bit déterminé de la table secrète MNV apparaît sur une sortie de celle-ci; le lecteur qui exécute la procédure simultanément envoie alors le même bit à la carte. Celle-ci compare les bits reçus avec les bits calculés et peut ne valider son propre fonctionnement que si la succession de résultats pendant les phases récurrentes est exacte.

La carte comporte alors un moyen pour comparer un bit issu d'une sortie de la mémoire MNV à un bit envoyé par le lecteur en synchronisme.

Cette particularité est avantageuse par exemple dans le cas où on veut réaliser des cartes à prépaiement rechargeables : le rechargement ne s'effectuera (par effacement de tous les- bits d'une mémoire réservée à un crédit d'unités) que si le lecteur envoie la succession de bits qui correspond à une séquence de cryptage correct. C'est donc la carte qui contrôle le lecteur en même temps que le lecteur contrôle la carte.

## Revendications

1. Procédé de cryptage d'information à l'aide d'une mémoire de données secrètes (MNV) servant de clé de cryptage caractérisé en ce qu'il comporte l'exécution récurrente du cycle suivant : lecture d'un mot dans la mémoire de données secrètes (MNV) comprise dans un système de cryptage, ce mot étant situé à une adresse déterminée au moins en partie (A01-A03) par le contenu du mot lu au cycle précédent, la partie restante de l'adresse étant déterminée par au moins un bit (A04) provenant soit d'une donnée interne (MDI, CPT1,ALINT) au système de cryptage, soit d'une donnée externe (ALEXT) au système de cryptage, l'ensemble des mots lus au cours des cycles successifs servant à établir un nouveau mot aléatoire à l'intérieur du système de cryptage.

2. Procédé de cryptage selon la revendication 1, caractérisé en ce que la mémoire de données secrètes est contenue dans une carte à mémoire pouvant être introduite dans un lecteur de cartes, le cryptage servant à l'authentification de la carte.

3. Procédé selon la revendication 2, caractérisé en ce qu'il comporte une phase de cycles récurrents utilisant une donnée d'identification de la carte (MDI), dans laquelle l'adresse (RA1) d'un mot lu au cours d'un cycle est définie en partie (A01-A03) à partir des bits (D01-D03) d'un mot lu au cycle précédent, et en partie à partir d'au moins un bit (A04) provenant (DT) d'une donnée d'identification de la carte, stockée dans la carte (MDI).

4. Procédé selon l'une des revendications 2 et 3, caractérisé en ce qu'il comporte une phase de cycles récurrents utilisant une donnée externe (ALEXT), dans laquelle l'adresse (RA1) d'un mot lu au cours d'un cycle est définie en partie par les bits (D01-D03) d'un mot lu à l'adresse précédente et en partie par au moins un bit (A04) d'une donnée transmise (C) par le lecteur de cartes à la carte.

5. Procédé selon la revendication 4, caractérisé en ce que la donnée transmise par le lecteur est une donnée aléatoire.

6. Procédé selon la revendication 5, caractérisé en ce que les mots lus au cours des cycles successifs servent à établir un nouveau mot aléatoire (ALINT) à l'intérieur de la carte, ce mot étant stocké dans un registre interne (RR3) de la carte.

7. Procédé selon l'une des revendications 2 à 6, caractérisé en ce qu'il comporte une phase de cycles récurrents utilisant une donnée aléatoire interne, dans laquelle l'adresse (RA1) d'un mot lu au cours d'un cycle est définie en partie (A01-A03) par le mot lu à l'adresse précédente et en partie (A04) par au moins un bit d'un registre interne (RR3) de la carte, ce registre contenant un mot aléatoire (ALINT).

8. Procédé selon la revendication 7, caractérisé en ce que le registre interne (RR3) est adressable et en ce que l'adresse appliquée à ce registre, au cours d'un cycle de la phase récurrente utilisant la donnée aléatoire interne est constituée à partir d'un mot (D01-D04) lu dans la mémoire au cours de ce cycle.

9. Procédé selon l'une des revendications précédentes, pour l'authentification d'une carte à puce contenant une mémoire données secrètes, cette carte étant introduite dans un lecteur de cartes, caractérisé en ce que le lecteur de cartes envoie à la carte une donnée aléatoire, la carte effectue un cryptage par phases récurrentes, et la carte envoie au lecteur un résultat de cryptage constitué à partir de bits des mots lus dans la mémoire au cours de certains des cycles récurrents.

10. Procédé selon la revendication 2, caractérisé en ce que le lecteur de cartes envoie à la carte un code aléatoire externe (ALEXT), et en ce que la carte engendre un code aléatoire interne (ALINT, RR3) à partir de ce code externe, sans stockage du code externe, le code interne étant utilisé pour l'authentification de la carte à puce par cryptage de ce code à l'aide des données secrètes contenues dans la mémoire (MNV).

11. Procédé selon l'une des revendications précédentes, caractérisé en ce que le cryptage fait intervenir une donnée variant à chaque nouvelle utilisation de la carte, telle que le contenu d'un compteur d'opérations.

12. Carte à puce pourvue d'un circuit de cryptage comme moyen de sécurité contre la fraude, ce circuit comportant une mémoire de données secrètes (MNV) servant de clé de cryptage, caractérisé en ce qu'il comporte un registre d'adresse (RA1) pour contenir une adresse de mot de la mémoire, un registre de donnée (RD2) pour recevoir et stocker temporairement le mot lu à l'adresse contenue dans le registre d'adresse, des moyens pour placer dans le registre d'adresse au moins une partie (D01-D03) du mot contenu dans le registre de donnée, la partie restante de l'adresse (A04) contenue dans le registre d'adresse étant déterminée par au moins un bit provenant soit d'une donnée interne (MDI, CPT1,ALINT) au système de cryptage, soit d'une donnée externe (ALEXT) au système de cryptage, l'ensemble des mots lus au cours des cycles successifs servant à établir un nouveau mot aléatoire à l'intérieur du système de cryptage, et des moyens pour exécuter des lectures successives de la mémoire aux adresses successivement obtenues dans le registre d'adresse.

13. Carte à puce selon la revendication 12 caractérisée en ce qu'elle comporte des moyens pour transmettre à l'extérieur de la carte un résultat de cryptage constitué par une succession de bits prélevés dans le registre de donnée (RD2) au cours de certaines des lectures successives.

14. Carte à puce selon la revendication 13, caractérisée en ce qu'elle comporte des moyens pour placer dans le registre d'adresse (RA1) au moins un bit (A04) ne provenant pas du mot contenu dans le registre de donnée.

15. Carte à puce selon la revendication 14, caractérisée en ce qu'elle comporte des moyens pour placer dans le registre d'adresse (RA1) un bit (A04) provenant du lecteur de cartes.

16. Carte à puce selon l'une des revendications 14 et 15, caractérisée en ce qu'elle comporte des moyens pour placer dans le registre d'adresse (RA1) un bit (A04) provenant d'une mémoire non volatile de la carte (MDI).

17. Carte à puce selon l'une des revendications 14 à 16, caractérisée en ce qu'elle comporte des moyens pour placer dans le registre d'adresse (RA1) un bit (A04) provenant d'un registre volatile de la carte (RR3).

18. Carte à puce selon l'une des revendications 13 à 17, caractérisée en ce qu'elle comporte des moyens pour placer dans un registre volatile (RR3) de la carte des bits (D04) provenant du registre de donnée (RD2), ces bits étant obtenus au cours de lectures successives de la mémoire.

## Patentansprüche

1. Verfahren zum Verschlüsseln von Information mittels eines Speichers für geheime Daten (MNV), die als Verschlüsselungsschlüssel dienen,
dadurch gekennzeichnet, daß
es die wiederholte Ausführung des folgenden Zyklus aufweist: Lesen eines Worts im Speicher für geheime Daten (MNV), der in einem Verschlüsselungssystem enthalten ist, wobei sich das Wort an einer Adresse befindet, die sich zumindest teilweise (A01 - A03) durch den Inhalt des Worts bestimmt, das im vorherigen Zyklus gelesen wurde, wobei der verbleibende Teil der Adresse bestimmt wird durch zumindest ein Bit (A04), das sich entweder durch interne Daten (NDI, CPT1, ALINT) des Verschlüsselungssystems ergibt oder durch externe Daten (ALEXT) des Verschlüsselungssystems, wobei die Gruppe der während der wiederholten Ausführung des Zyklus gelesenen Worte dazu dienen, im Inneren des Verschlüsselungssystems ein neues Zufallswort zu ermitteln.

2. Verschlüsselungsverfahren nach Anspruch 1, dadurch gekennzeichnet, daß der Speicher für geheime Daten in einer Speicherkarte enthalten ist, die in einen Kartenleser eingeführt werden kann, wobei die Verschlüsselung zur Authentifizierung der Karte dient.

3. Verfahren nach Anspruch 2, dadurch gekennzeichnet, daß es eine Phase von rekurrierenden Zyklen aufweist, die Identifizierungsdaten der Karte (MDI) verwenden, in denen die Adresse (RA1) eines während eines Zyklus gelesenen Worts teilweise definiert ist (A01 - A03) ausgehend von Bits (D01 - D03) eines im vorhergehenden Zyklus gelesenen Worts, und teilweise ausgehend von zumindest einem Bit (A04), das sich aus Identifikationsdaten der Karte ergibt (DT), die in der Karte gespeichert sind (MDI).

4. Verfahren nach Anspruch 2 und 3, dadurch gekennzeichnet, daß es eine Phase von rekurrierenden Zyklen aufweist, die externe Daten (ALEXT) verwenden, in denen die Adresse (RA1) eines im Laufe eines Zyklus gelesenen Worts teilweise definiert ist durch die Bits (D01 - D03) eines Worts, das an der vorhergehenden Adresse gelesen wurde, und teilweise durch zumindest 1 Bit (A04) von Daten, die durch den Kartenlesen zur Karte übertragen wurde (C).

5. Verfahren nach Anspruch 4, dadurch gekennzeichnet, daß die durch den Kartenleser übertragenen Daten Zufallsdaten sind.

6. Verfahren nach Anspruch 5, dadurch gekennzeichnet, daß die während der sukzessiven Zyklen gelesenen Worte zum Ermitteln eines neuen Zufallsworts (ALINT) im Inneren der Karte dienen, wobei das Wort in einem inneren Register (RR3) der Karte gespeichert wird.

7. Verfahren nach einem der Ansprüche 2 bis 6, dadurch gekennzeichnet, daß es eine Phase rekurrierender Zyklen aufweist, die interne Zufallsdaten verwenden, in denen die Adresse (RA1) eines im Laufe eines Zyklus gelesenen Worts teilweise definiert ist (A01 - A03) durch das an der vorhergehenden Adresse gelesene Wort sowie teilweise (A04) durch zumindest ein Bit eines internen Registers (RR3) der Karte, wobei das Register ein Zufallswort (ALINT) enthält.

8. Verfahren nach Anspruch 7, dadurch gekennzeichnet, daß das interne Register (RR3) adressierbar ist, und dadurch, daß die Adresse, die während eines Zyklus in der rekurrierenden Phase, die die internen Zufallsdaten verwendet, an das Register angelegt wird, ausgehend von einem Wort (D01 - D04) gebildet wird, das im Speicher während des Zyklus gelesen wird.

9. Verfahren nach einem der vorhergehenden Ansprüche zur Authentifizierung einer Chipkarte, die einen Speicher für geheime Daten aufweist, wobei die Karte in einen Kartenleser eingeführt wird, dadurch gekennzeichnet, daß der Kartenleser an die Karte Zufallsdaten überträgt, wobei die Karte in einer rekurrierenden Phase eine Verschlüsselung vornimmt und die Karte an den Leser ein Verschlüsselungsergebnis überträgt, das gebildet wird ausgehend von Bits von Worten, die im Speicher während bestimmter der rekurrierenden Zyklen gelesen wurden.

10. Verfahren nach Anspruch 2, dadurch gekennzeichnet, daß der Kartenleser an die Karte einen externen Zufallscode (ALEXT) überträgt, sowie dadurch, daß ausgehend vom externen Code die Karte einen internen Zufallscode (ALINT, RR3) erzeugt, ohne daß der externe Code gespeichert wird, wobei der interne Code zur Authentifizierung der Chipkarte durch Verschlüsselung des Codes mittels geheimer Daten, die im Speicher (MNV) enthalten sind, verwendet wird.

11. Verfahren nach einem der vorhergehenden Ansprüche, dadurch gekennzeichnet, daß die Verschlüsselung bei jeder neuen Benützung der Karte auf veränderliche Daten Bezug nimmt, beispielsweise auf den Inhalt eines Vorgangszählers.

12. Chipkarte für eine Verschlüsselungsschaltung, wie eine Einrichtung zum Sichern gegen Betrug, wobei die Schaltung einen Speicher für geheime Daten (MNV) aufweist, die als Verschlüsselungsschlüssel dienen, dadurch gekennzeichnet, daß sie ein Adressenregister (RA1) aufweist, um eine Adresse eines Worts des Speichers zu enthalten, ein Datenregister (RD2) zum Aufnehmen und zeitweisen Speichern des Worts, das an der Adresse gelesen wurde, die im Adressenregister enthalten ist, einer Einrichtung zum Schreiben im Adreßregister zumindest eines Teils des im Datenregister enthaltenen Worts, wobei der verbleibende Teil der Adresse (A04), die im Adressenregister enthalten ist, bestimmt wird durch zumindest ein Bit, das sich ergibt entweder aus internen Daten (MDI, CPT1, ALINT) des Verschlüsselungssystems oder aus externen Daten (ALEXT) des Verschlüsselungssystems, wobei die Gruppe der im Laufe der sukzessiven Zyklen gelesenen Worte zum Erstellen eines neuen Zufallsworts im Inneren des Verschlüsselungssystems dienen, sowie mit einer Einrichtung zum Ausführen der sukzessiven Lesevorgänge im Speicher an den sukzessive im Adressenregister enthaltenen Adressen.

13. Chipkate nach Anspruch 12, dadurch gekennzeichnet, daß sie eine Einrichtung aufweist zum Übertragen zum Äußeren der Karte eines Verschlüsselungsergebnisses, das gebildet wird durch eine Bitfolge, die dem Datenregister (RD2) während bestimmter der aufeinanderfolgenden Lesevorgänge entnommen werden.

14. Chipkarte nach Anspruch 13, dadurch gekennzeichnet, daß sie eine Einrichtung aufweist zum Speichern zumindest eines Bits (A04) im Adressenregister (RA1), das sich nicht aus dem im Datenregister enthaltenen Wort ergibt.

15. Chipkarte nach Anspruch 14, dadurch gekennzeichnet, daß sie eine Einrichtung aufweist zum Speichern eines Bits (A04) im Adressenregister (RA1), das vom Kartenleser stammt.

16. Chipkarte nach Anspruch 14 oder 15, dadurch gekennzeichnet, daß sie eine Einrichtung aufweist zum Speichern zumindest eines Bits (A04) im Adressenregister (RA1), das einem nichtflüchtigen Speicher der Karte (MDI) entstammt.

17. Chipkarte nach einem der Ansprüche 14 bis 16, dadurch gekennzeichnet, daß sie eine Einrichtung aufweist zum Speichern zumindest eines Bits (A04) im Adressenregister (RA1), das einem flüchtigen Speicher der der Karte (RR3) entstammt.

18. Chipkarte nach einem der Ansprüche 13 bis 17, dadurch gekennzeichnet, daß sie eine Einrichtung aufweist zum Speichern von Bits (D04) in einem flüchtigen Speicher (RR3) der Karte, die dem Datenregister (RD2) entstammen, wobei die Bits im Laufe des sukzessiven Lesens des Speichers erhalten wurden.

## Claims

1. Process for the encryption of information with the aid of a secret data memory (MNV) serving as an encryption key, **characterised in that** it comprises the recursive execution of the following cycle: reading a word in the secret data memory (MNV) comprised in an encryption system, this word being located at an address which is determined at least in part (A01-A03) by the content of the word that is read in the preceding cycle, the remaining part of the address being determined by at least one bit (A04) originating either from a datum (MDI, CPT1, ALINT) internal to the encryption system or from a datum (ALEXT) external to the encryption system, with the totality of the words read in the course of the successive cycles serving to establish a new random word within the encryption system.

2. Encryption process according to claim 1, characterised in that the secret data memory is contained in a memory card capable of being inserted into a card reader, the encryption serving to authenticate the card.

3. Process according to claim 2, characterised in that it comprises a phase of recursive cycles using a card identification datum (MDI) in which the address (RA1) of a word that is read in the course of a cycle is defined at least in part (A01-A03) from the bits (D01-D03) of a word read in the preceding cycle and in part from at least one bit (A04) originating (DT) from a card identification datum (MDI) stored in the card.

4. Process according to one of claims 2 and 3, characterised in that it comprises a phase of recursive cycles using an external datum (ALEXT) in which the address (RA1) of a word that is read in the course of a cycle is defined in part by the bits (D01-D03) of a word that is read at the preceding address and in part by at least one bit (A04) of a datum (C) transmitted by the card reader to the card.

5. Process according to claim 4, characterised in that the datum transmitted by the reader is a random datum.

6. Process according to claim 5, characterised in that the words that are read in the course of the successive cycles serve to establish a new random word (ALINT) inside the card, this word being stored in an internal register (RR3) of the card.

7. Process according to one of claims 2 to 6, characterised in that it comprises a phase of recursive cycles using an internal random datum in which the address (RA1) of a word that is read in the course of a cycle is defined in part (A01-A03) by the word that is read at the preceding address and in part (A04) by at least one bit of an internal register (RR3) of the card, this register containing a random word (ALINT).

8. Process according to claim 7, characterised in that the internal register (RR3) is addressable and in that the address assigned to this register, in the course of a cycle of the recursive phase using the internal random datum, is formed from a word (D01-D04) read in the memory in the course of this cycle.

9. Process according to one of the preceding claims, for the authentication of a chip card containing a secret data memory, this card being inserted into a card reader, characterised in that the card reader sends a random datum to the card, the card carries out an encryption in recursive phases, and the card sends to the reader an encryption result formed from bits of the words that are read in the memory in the course of some of the recursive cycles.

10. Process according to claim 2, characterised in that the card reader sends an external random code (ALEXT) to the card and in that the card generates an internal random code (ALINT, RR3) from this external code, without storing the external code, the internal code being used for the authentication of the chip card by encryption of this code with the aid of the secret data contained in the memory (MNV).

11. Process according to one of the preceding claims, characterised in that the encryption brings in a datum, such as the content of an operations counter, which varies with each new use of the card.

12. Chip card provided with an encryption circuit as a means of security against fraud, this circuit comprising a secret data memory (MNV) serving as an encryption key, characterised in that it comprises an address register (RA1) for containing a word address of the memory, a data register (RD2) for receiving and temporarily storing the word that is read at the address contained in the address register, means for placing, in the address register, at least part (D01-D03) of the word contained in the data register, the remaining part (A04) of the address contained in the address register being determined by at least one bit originating either from a datum (MDI, CPT1, ALINT) internal to the encryption system or from a datum (ALEXT) external to the encryption system, the totality of the words that are read in the course of the successive cycles serving to establish a new random word within the encryption system, and means for executing successive readings of the memory at the addresses successively obtained from the address register.

13. Chip card according to claim 12, characterised in that it comprises means for transmitting outside the card an encryption result formed by a succession of bits taken from the data register (RD2) in the course of some of the successive readings.

14. Chip card according to claim 13, characterised in that it comprises means for placing in the address register (RA1), at least one bit (A04) not originating from the word contained in the data register.

15. Chip card according to claim 14, characterised in that it comprises means for placing in the address register (RA1), a bit (A04) originating from the card reader.

16. Chip card according to one of claims 14 and 15, characterised in that it comprises means for placing in the address register (RA1), a bit (A04) originating from a non-volatile memory (MDI) of the card.

17. Chip card according to one of claims 14 to 16, characterised in that it comprises means for placing in the address register (RA1), a bit (A04) originating from a volatile memory (RR3) of the card.

18. Chip card according to one of claims 13 to 17, characterised in that it comprises means for placing in a volatile register (RR3) of the card, bits (D04) originating in the data register (RD2), these bits being obtained in the course of successive readings of the memory.
